# EUROPÄISCHE PATENTANMELDUNG

(11) **EP 2 103 931 A2**
(43) Veröffentlichungstag der Anmeldung: **23.09.2009**
(21) Anmeldenummer: 09154823.0
(22) Anmeldetag: 11.03.2009
(51) Int. Cl.: G01N 29/265, G01N 29/30

(54) **Kalibrierung für ein System zur zerstörungsfreien Werkstoffprüfung**

(30) Priorität: 20.03.2008 DE 102008015238
(71) Anmelder: Siemens Aktiengesellschaft, 80333 München (DE)
(72) Erfinder: Hain, Stefan, 91090, Effeltrich (DE); Mooshofer, Hubert, 80538, München (DE); de Carvalho Ferreira, Fabricio, 91052, Erlangen (DE)

(57) **Zusammenfassung**

Es wird eine Kalibrierung für ein Ultraschallsystem zur zerstörungsfreien Werkstoffprüfung angegeben, wobei das System ein Array aus Ultraschallwandlern aufweist, die linear bewegbar und schwenkbar sind. Um den Versatz zwischen der Strahlrichtung der Ultraschallwandler und dem Drehpunkt des Schwenksystems oder einem anderen Sollpunkt der Wandler auszugleichen, wird anhand eines beispielsweise kugelförmigen Kalibrierkörpers dieser Versatz bestimmt.

## Beschreibung

Die Erfindung betrifft das Gebiet der zerstörungsfreien Werkstoffprüfung. Für diese gibt es eine Reihe von Möglichkeiten. So kann beispielsweise mit Sensoren Strahlung wie beispielsweise Wärmestrahlung von einem zu testenden Prüfling empfangen und ausgewertet werden. Dabei wird die Oberfläche des Prüflings beispielsweise abgetastet. Es ist auch möglich, die Strahlung auszusenden und einen reflektierten Anteil dieser Strahlung wieder zu empfangen und auszuwerten. Bei der Strahlung kann es sich um elektromagnetische Strahlung oder auch um Schallwellen wie beispielsweise Ultraschall handeln. Die Erfindung befasst sich dabei insbesondere mit einem Ultraschall-Wandlersystem, ist aber auch für andere Sorten von Strahlung anwendbar. Im weiteren Text wird für einen jeweiligen Sensor oder eine Kombination aus einem Sensor und einem Emitter für die Strahlung der Begriff Wandler verwendet. So kann beispielsweise Ultraschall-Wandler einen UltraschallSensor oder eine Kombination aus einem Ultraschall-Sender und Ultraschall-Empfänger bezeichnen.

Je nach Art der verwendeten Strahlung kann es notwendig sein, einen bestimmten Abstand des oder der Wandler von der Oberfläche des Prüflings einzuhalten. Weiterhin kann es je nach Art der verwendeten Strahlung notwendig sein, einen bestimmten Winkel zur Oberfläche des Prüflings einzuhalten. Bei gekrümmten Oberflächen wie beispielsweise halbkugelförmigen Enden eines Stabs ist hierzu zumindest ein Schwenksystem nötig, das den oder die Wandler um eine oder mehrere Schwenkachsen / Drehpunkte drehen kann.

Mechanische Toleranzen der Wandler selbst oder solche, die beim Einbau der Wandler auftreten, bewirken, dass ein von den Wandlern ausgesandter Strahl wie beispielsweise UltraschallStrahl nicht durch den gewünschten Zielpunkt fällt. Ein Beispiel für einen solchen gewünschten Zielpunkt ist der Drehpunkt des Schwenksystems. Es kann aber konstruktiv auch ein anderer Drehpunkt für das Schwenksystem gewählt werden, der nicht auf dem Schallstrahl liegt, und beim Schwenk eine entsprechend verschobene Positionierung (gemäß dem konstruktiven Versatz) vorgenommen werden. Auch in diesem Fall verringern die Toleranzen die Genauigkeit bzw. verhindern die Prüfung. Der Auftreffpunkt der Strahlung ändert sich dadurch, auch wenn beispielsweise nur eine der Schwenkachsen des Schwenksystems betätigt wird. Dadurch wird die Genauigkeit der Werkstoffprüfung verringert oder es wird gar die Werkstoffprüfung unmöglich gemacht.

Es ist bekannt, zur Vermeidung dieses Problems die Wandler in Halterungen einzusetzen, die in einem mechanischen Kontakt zur Oberfläche des Prüflings stehen. Kufen oder Rollen sorgen dafür, dass die Wandler bei Bewegung der Oberfläche des Prüflings folgen und damit Abstand und Winkel sicherstellen. Voraussetzung ist jedoch, dass sich die Krümmung der Prüflingsoberfläche nur langsam ändert, so dass die Mechanik der Oberfläche hinreichend genau folgen kann. An dieser Lösung ist aber nachteilig, dass der Prüfling einer mechanischen Belastung ausgesetzt ist. Weiterhin ergeben sich ein gewisser Verschleiß der Oberfläche des Prüflings und eine begrenzte Geschwindigkeit der Bewegung der Wandler.

Es ist Aufgabe der vorliegenden Erfindung, eine Einrichtung zur zerstörungsfreien Werkstoffprüfung und ein Verfahren zur zerstörungsfreien Werkstoffprüfung anzugeben, womit die oben genannten Probleme vermieden werden. Diese Aufgabe wird durch eine Einrichtung mit den Merkmalen von Anspruch 1 und ein Verfahren mit den Merkmalen von Anspruch 9 gelöst. Die abhängigen Ansprüche betreffen vorteilhafte Ausgestaltungen und Weiterbildungen der Erfindung.

Bei der erfindungsgemäßen Einrichtung zur zerstörungsfreien Werkstoffprüfung mit wenigstens einem Wandler ist der Wandler mittels eines Schwenksystems auf wenigstens einer Achse um einen Drehpunkt schwenkbar. Weiterhin ist der Wandler mittels eines linearen Bewegungssystems in wenigstens einer Richtung linear verschiebbar. Die Einrichtung ist weiterhin derart ausgestaltet, dass ein Kalibrierwert bestimmbar ist, der einen Versatz zwischen einem Sollpunkt, der auf einer gewünschten Strahlrichtung des Wandlers liegt und der tatsächlichen Strahlrichtung des Wandlers liegt angibt und dass der Kalibrierwert verwendbar ist, um den Versatz derart auszugleichen, dass ein vom Wandler emittierter Strahl durch den Sollpunkt verläuft. Unter dem Versatz wird dabei der minimale Abstand des Strahls des Wandlers vom Sollpunkt verstanden, wobei der Strahl idealisiert ohne seine Aufweitung betrachtet wird. Bei dem Sollpunkt kann es sich insbesondere um den Drehpunkt des Schwenksystems handeln.

Die erfindungsgemäße Einrichtung ist durch ihre Merkmale in der Lage, die durch mechanische Toleranzen bewirkten Ungenauigkeiten bei der Bestrahlung und beim Empfang von Echos der Oberfläche eines Werkstücks oder Prüflings auszugleichen und somit eine wesentlich genauere Prüfung durchzuführen. Insbesondere ist sie in Lage, den Auftreffwinkel der Strahlung, die der Wandler emittiert, unabhängig vom Auftreffort der Strahlung zu variieren. Das heißt, der Auftreffwinkel lässt sich ändern, wobei der Auftreffort gleich bleibt. Andersherum lässt sich der Auftreffort ändern, ohne dabei maschinell bedingt den Auftreffwinkel zu ändern; der Auftreffwinkel ist dann also lediglich von der Krümmung des Prüflings abhängig.

Vorteilhafterweise ist für die Bestimmung des Kalibrierwerts ein Kalibrierkörper vorgesehen. Dieser weist bevorzugt eine hohlkugelförmige oder kugelförmige Fläche auf, ist also insbesondere eine halbe Hohlkugel oder eine Kugel. Auch eine hohlzylindrische oder zylindrische Fläche kann verwendet werden, was insbesondere dann zweckmäßig ist, wenn das Schwenksystem nur eine Drehung um eine Achse zulässt.

Das Schwenksystem und/oder das lineare Bewegungssystem sind zum Drehen um zwei Achsen bzw. für eine Bewegung in 3 Achsen ausgestaltet. Bei dem Wandler handelt es sich bevorzugt um einen Ultraschall-Wandler, der eine Kombination aus einem Ultraschall-Emitter und einem Sensor für Ultraschall darstellt. Bevorzugt weist die Einrichtung eine Mehrzahl der Wandler, insbesondere acht Wandler, auf.

Bei dem erfindungsgemäßen Verfahren zur zerstörungsfreien Werkstoffprüfung wird eine Einrichtung zur zerstörungsfreien Werkstoffprüfung mit wenigstens einem Wandler zur Aussendung eines Strahls verwendet. Weiterhin wird der Wandler mittels eines Schwenksystems und eines linearen Bewegungssystems über der Oberfläche eines zu prüfenden Werkstücks bewegt. Es wird ein Kalibrierwert bestimmt, der einen Versatz zwischen einem Sollpunkt, der auf einer gewünschten Strahlrichtung des Wandlers liegt und der tatsächlichen Strahlrichtung des Wandlers liegt angibt. Der Kalibrierwert wird schließlich verwendet, um den Versatz derart auszugleichen, dass ein vom Wandler emittierter Strahl durch den Sollpunkt verläuft.

Als Ergebnis der erfindungsgemäßen Vorgehensweise wird also ein Parametersatz aus wenigstens einem Parameter bestimmt, der die Umrechnung der Soll-Bewegung in eine tatsächliche Bewegung gestattet. Beispielsweise kann bei leicht schräger, jedoch im Wesentlichen senkrechter Drehachse zusätzlich eine Höhenkorrektur erfolgen. Der Versatz kann also in mehreren Dimensionen erfasst und ausgeglichen werden.

Bevorzugt wird der Strahl aus drei verschiedenen Richtungen auf den Kalibrierkörper gerichtet und für jede der Richtungen ermittelt, bei welcher linearen Verschiebung der am Kalibrierkörper reflektierte Strahl den Wandler trifft. Dabei ist es für eine hohe Genauigkeit vorteilhaft, wenn für jede der Richtungen für zwei Abstände des Wandlers vom Kalibrierkörper ermittelt wird, bei welcher linearen Verschiebung der am Kalibrierkörper reflektierte Strahl den Wandler trifft. Aus den zwei Punkten wird die Laufzeit bestimmt und durch Interpolation ein Punkt mit definiertem Abstand bestimmt.

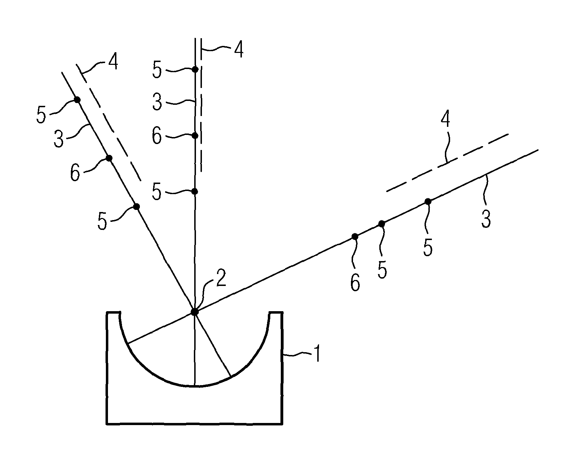

Weitere Vorteile und Einzelheiten der Erfindung werden anhand des in der Zeichnung dargestellten Ausführungsbeispiels erläutert. Die Figur zeigt dabei schematisch einen Hohlkugel-Kalibrierkörper 1 und die für die Bestimmung des Versatzes beispielhaft verwendeten Messpunkte 5 und -richtungen.

Mit einer Kalibriervorrichtung und den dazugehörigen Messungen entsprechend der im Folgenden skizzierten Schritte wird die relative Lage des Schallstrahls eines Ultraschall-Wandlers zum mechanischen Drehpunkt 7 vermessen. Ist diese Differenz bekannt, kann bei einer Änderung des Schwenkwinkels mit einem linearen Bewegungssystem für den Wandler eine Ausgleichsbewegung durchgeführt werden und der Auftreffpunkt des Schallstrahls auf einem Prüfling bleibt unabhängig vom Einschallwinkel.

Die Kalibriervorrichtung weist in diesem Beispiel einen Kalibrierkörper 1 in Form eines Hohlkugelabschnitts auf. Dadurch reflektiert der Kalibrierkörper 1 nur solche Schallstrahlen zurück zum Wandler, die durch den Mittelpunkt 2 des Kalibrierkörpers 1 laufen. Für jeden solchen Strahl ist dann ein Koordinatenpunkt bekannt. Zur Ermittlung der Koordinaten des Drehpunkts 7 werden nun 3 Schwenkwinkel, d.h. Richtungen zur Einstrahlung auf den Kalibrierkörper 1 eingestellt, wodurch sich im ersten Moment drei Schallstrahlen ohne Ausrichtung 4 ergeben. Die Koordinaten, die dabei das lineare Bewegungssystem vorgibt, sind bekannt. Für jeden der Schwenkwinkel werden in zwei verschiedenen Abständen durch eine Variation des Wandlers mit dem linearen Bewegungssystem Positionen 5 gesucht, in denen die Schallstrahlen zurück zum Wandler, d.h. durch den Mittelpunkt 2 des Kalibrierkörpers 1 laufen. Der Abstand der Positionen 5 vom Mittelpunkt 2 wird durch die Schalllaufzeiten ermittelt.

Durch eine Interpolation wird nun aus den sechs Positionen 5 auf drei interpolierte Punkte 6 geschlossen, die auf einem Kreis um den Mittelpunkt des Kalibrierkörpers 1 liegen, d.h. den gleichen Abstand vom Mittelpunkt 2 haben. Aus den Koordinaten der interpolierten Punkte 6 lässt sich die Position des Mittelpunkts 2 bestimmen. Zusammen mit den linearen Verschiebungen, die verwendet wurden, um die Strahlen des Wandlers jeweils auf den Mittelpunkt 2 auszurichten und den Koordinaten des Mittelpunkts 2 selbst lässt sich die Position des Drehpunkts 7 bestimmen.

## Patentansprüche

1. Einrichtung zur zerstörungsfreien Werkstoffprüfung mit wenigstens einem Wandler, bei der:
- der Wandler mittels eines Schwenksystems auf wenigstens einer Achse um einen Drehpunkt schwenkbar ist,
- der Wandler mittels eines linearen Bewegungssystems in wenigstens einer Richtung linear verschiebbar ist,
derart ausgestaltet, dass
- ein Kalibrierwert bestimmbar ist, der einen Versatz zwischen einem Sollpunkt, der auf einer gewünschten Strahlrichtung des Wandlers liegt und der tatsächlichen Strahlrichtung des Wandlers liegt angibt, und
- der Kalibrierwert verwendbar ist, um den Versatz derart auszugleichen, dass ein vom Wandler emittierter Strahl durch den Sollpunkt verläuft.

2. Einrichtung gemäß Anspruch 1, bei der für die Bestimmung des Kalibrierwerts ein Kalibrierkörper definierter Form vorgesehen ist.

3. Einrichtung gemäß Anspruch 2, bei der der Kalibrierkörper wenigstens einen Teil einer hohlkugelförmigen, kugelförmigen, hohlzylindrischen oder zylindrischen Fläche aufweist.

4. Einrichtung gemäß Anspruch 3, wobei es sich bei dem Kalibrierkörper um eine Kugel oder um eine halbe Hohlkugel handelt.

5. Einrichtung gemäß einem der vorangehenden Ansprüche, bei der das Schwenksystem und/oder das lineare Bewegungssystem ausgestaltet sind zum Drehen um zwei Achsen bzw. für eine Bewegung in 3 Achsen.

6. Einrichtung gemäß einem der vorangehenden Ansprüche, bei der der Kalibrierwert verwendbar ist, um einen Strahl des Wandlers auf ein zu prüfendes Werkstück derart zu steuern, dass der Auftreffwinkel und der Auftreffort auf die Oberfläche des Werkstücks unabhängig voneinander variierbar sind.

7. Einrichtung gemäß einem der vorangehenden Ansprüche, bei der der Wandler ein Ultraschall-Wandler ist.

8. Einrichtung gemäß einem der vorangehenden Ansprüche mit acht Wandlern.

9. Verfahren zur zerstörungsfreien Werkstoffprüfung, bei dem eine Einrichtung zur zerstörungsfreien Werkstoffprüfung mit wenigstens einem Wandler zur Aussendung eines Strahls verwendet wird und bei dem:
- der Wandler mittels eines Schwenksystems und eines linearen Bewegungssystems über der Oberfläche eines zu prüfenden Werkstücks bewegt wird,
- ein Kalibrierwert bestimmt wird, der einen Versatz zwischen einem Sollpunkt, der auf einer gewünschten Strahlrichtung des Wandlers liegt und der tatsächlichen Strahlrichtung des Wandlers liegt angibt, und
- der Kalibrierwert verwendet wird, um den Versatz derart auszugleichen, dass ein vom Wandler emittierter Strahl durch den Sollpunkt verläuft.

10. Verfahren gemäß Anspruch 9, bei dem für die Bestimmung des Kalibrierwerts ein Kalibrierkörper verwendet wird, wobei anhand dessen Reflektion des Strahls der Versatz ermittelt wird.

11. Verfahren gemäß Anspruch 10, bei dem ein Kalibrierkörper verwendet wird, der wenigstens einen Teil einer hohlkugelförmigen, kugelförmigen, hohlzylindrischen oder zylindrischen Fläche aufweist.

12. Verfahren gemäß einem der Ansprüche 9 bis 11, bei dem der Strahl aus drei verschiedenen Richtungen auf den Kalibrierkörper gerichtet wird und für jede der Richtungen ermittelt wird, bei welcher linearen Verschiebung der am Kalibrierkörper reflektierte Strahl den Wandler trifft.

13. Verfahren gemäß Anspruch 12, bei dem für jede der Richtungen für zwei Abstände des Wandlers vom Kalibrierkörper ermittelt wird, bei welcher linearen Verschiebung der am Kalibrierkörper reflektierte Strahl den Wandler trifft.

14. Verfahren gemäß einem der Ansprüche 9 bis 13, bei dem eine Einrichtung gemäß einem der Ansprüche 1 bis 8 verwendet wird.
